# EUROPEAN PATENT APPLICATION

(11) **EP 1 310 790 A2**
(43) Date of publication of application: **14.05.2003**
(21) Application number: 02024522.1
(22) Date of filing: 31.10.2002
(51) Int. Cl.: G01N 30/46

(54) **Multi-column affinity detection system**

(30) Priority: 31.10.2001 JP 2001334342
(71) Applicant: EBARA CORPORATION, Ohta-ku, Tokyo (JP)
(72) Inventor: Nagasawa, Hiroshi, Fujisawa-shi, Kanagawa-ken (JP)
(74) Representative: Wagner, Karl H., Dipl.-Ing.

(57) **Abstract**

A multi-column affinity detection system which comprises a plurality of columns having probe molecules fixed thereto that will cause different specific binding reactions and a switching mechanism, said system being capable of simultaneous or sequential detection of many kinds of affinity characteristics. The probe molecules are preferably DNA, RNA or PNA and fragments thereof, oligonucleotides having desired base sequences, antigens, antibodies or epitopes, enzymes, proteins or polypeptide chains at functional sites thereof.

## Description

This invention relates to an affinity detection system that enables the recognition of many functional molecules and which may be employed in the diagnosis of genes and physiological functions.

In affinity detection, a substance that selectively binds to a specified molecule is used to achieve selective detection of the latter. This is a very sensitive detection method and an affinity column that detects a specified protein using a specified enzyme has been employed in liquid chromatography. However, the affinity method used in liquid chromatography only provides information about a specified molecule and it is not analytical means that simultaneously provides information about the existence of many molecules.

Detection of polymorphism due to gene mutation, particularly to the mutation of a single base (sequence) is not only effective in diagnosis of mutagenically caused diseases such as cancer but also necessary to give guidelines for drug response and side effects and contributes to analysis of genes associated with the etiology of multi-factor diseases and to predictive medicine. The so-called DNA chip which is a kind of the affinity method is known to be effective in the detection of polymorphism. A DNA chip having short DNA chains fixed thereon is available from Affymetrix under the trade name "Gene Chip" and consists of a silicon or glass substrate usually 1 cm square that has more than 10⁴ oligo-DNA fragments (DNA probes) constructed on it by photolithographic techniques. When a DNA sample to be analyzed, which is optionally fluorescence labeled, is flowed onto the DNA chip, a DNA fragment having a sequence complementary to a certain probe on the DNA chip binds to said probe and the binding area is selectively identified by fluorescence, allowing the specific sequence of the DNA fragment in the DNA sample to be recognized and quantitated. This method has already been shown to be capable of detecting a cancer gene mutation or gene polymorphism.

The micro-array having cDNA arranged on a glass slide is also in current use.

These affinity methods on a chip are very effective as analytical means that simultaneously provide information about the existence of many molecules. On the other hand, the chip's area is so small that the signal intensity that can be obtained is insufficient to permit the use of absorption analysis that is commonly used in liquid chromatography; the only alternative is high-sensitivity analysis by fluorescence detection but this has been solely applicable to analysis in limited areas. Therefore, so-called proteome can only be analyzed by other means such as two-dimensional electrophoresis.

The affinity method applied to liquid chromatography can provide information about a specified molecule but it has been difficult to simultaneously obtain information about a large number of molecules.

Hence, there is a need for detection means which is analytical means that not only uses a substance that binds selectively to a specified molecule and selectively detects the latter but which also provides simultaneous information about the existence of a large number of molecules and which is capable of high-sensitivity analysis with relative ease.

The present invention has been accomplished under these circumstances and has as an object providing a multi-column affinity detection system that uses a reactive probe substance which develops a sufficient signal intensity to reduce the difficulty involved in fluorescence detection and which can perform simultaneous and high-sensitivity analysis for the existence of a large number of molecules.

The present invention attains the stated object by one of the following systems:
(1) A multi-column affinity detection system which comprises a plurality of columns having probe molecules fixed thereto that will cause different specific binding reactions, a sample supply switching mechanism that simultaneously or sequentially supplies a sample into each column and detection means for detecting the effluent from each column, said system being capable of simultaneous or sequential detection of many kinds of affinity characteristics with the respective elements being functionally connected together;
(2) The multi-column affinity detection system according to (1), wherein said columns having probe molecules fixed thereto are monolithic columns or membrane columns;
(3) The multi-column affinity detection system according to (1) or (2), wherein said probe molecules are DNA, RNA or PNA and fragments thereof, oligonucleotides having desired base sequences, antigens, antibodies or epitopes, enzymes, proteins or polypeptide chains at functional sites thereof;
(4) The multi-column affinity detection system according to any one of (1) - (3), wherein said switching mechanism comprises a continuously operating sampler and a switching valve that is operatively associated with said sampler and which is coupled to said plurality of columns which have probe molecules fixed thereto that will cause different specific binding reactions and wherein identical samples are sequentially introduced in the same quantity into said plurality of columns and the effluents from the respective columns are allowed to converge and then introduced into a single detector, whereby the samples are sequentially loaded into the plurality of different columns for sequential detection;
(5) The multi-column affinity detection system according to any one of (1) - (3), wherein said switching mechanism is a splitting sampler capable of simultaneously supplying divided portions of a sample in a constant quantity and wherein branch lines coupled to said sampler are also coupled to said plurality of columns which have probe molecules fixed thereto that will cause different specific binding reactions and wherein identical samples are simultaneously introduced in the same quantity into said plurality of columns and the effluents from the respective columns are introduced into separate detectors, whereby the samples are simultaneously loaded into the plurality of different columns for simultaneous detection.

Figs. 1(a) and 1(b) show in conceptual form two examples of the multi-column affinity detection system of the invention, with particular emphasis on how multiple columns are coupled to the sites of sample introduction and detection;
Fig. 2 shows in conceptual form a column having probe molecules fixed within the affinity detection system of the invention;
Fig. 3 shows in conceptual form how probe molecules and cDNA are fixed within a separating substrate;
Fig. 4 shows in conceptual form how probe molecules and oligonucleotides are fixed within a separating substrate;
Fig. 5 shows in conceptual form an example of the method of installing a separating substrate within a holder unit;
Fig. 6 shows in conceptual form an example of the method of introducing a sample into the affinity detection system of the invention; and
Fig. 7 is a perspective view illustrating how a sample is allowed to have affinity binding to a separating substrate within one of the columns in the system.

Modes for carrying out the invention are described below in detail with reference to the accompanying drawings.

### (Multi-column affinity detection system)

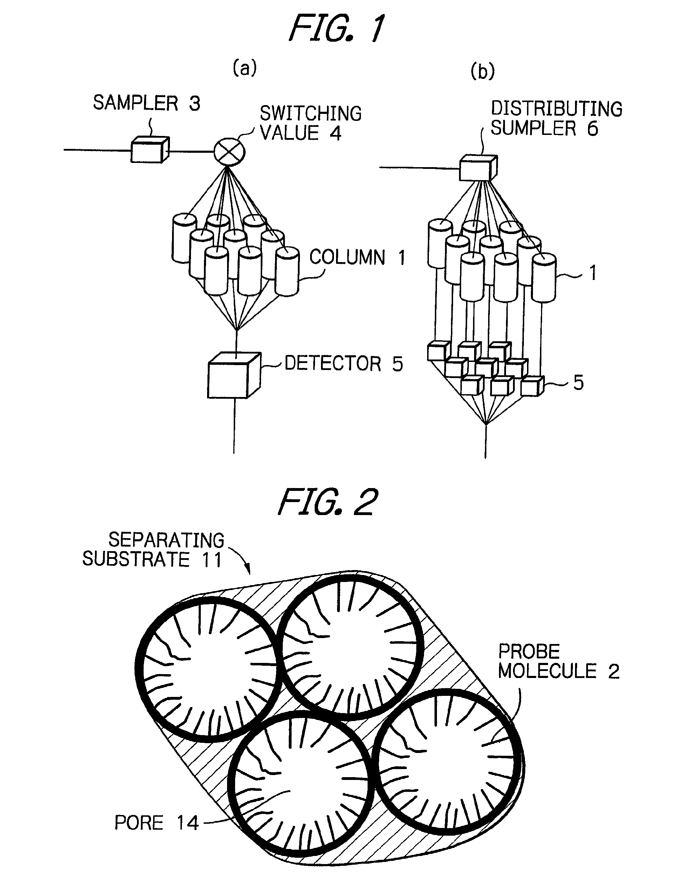

Fig. 1(a) and Fig. 1(b) show in conceptual form two different types of the multi-column affinity detection system of the invention. While a plurality of columns 1 are used, each column has fixed thereto one kind of specific reaction probe 2 (sometimes called "probe molecule"; see Fig. 2), which shows specific affinity for a substance having specified reactivity. If the probe molecule 2 is a specified antibody, an antigen that reacts with this antibody is strongly adsorbed on it. Therefore, the antigen will not elute under ordinary eluting conditions but it elutes only at a solvent's concentration or in the presence of a salt or under pH conditions that can no longer maintain its retention. In the case of affinity columns applied to conventional liquid chromatography, this phenomenon has typically been utilized as means for concentrating specified enzymes.

However, in the case of affinity chromatography, if obtaining specific adsorption is the only concern, one may adopt a separation mode that detects the presence of a molecular analyte (target molecule) by solely depending upon its specific retention rather than on its elution which is conventionally relied upon. Further, in this mode, it is preferred to use columns 1 of an extremely small retention capacity, with the separating substrate being either membranous to construct a so-called membrane chromatograph or monolithic to construct a monolithic column system. An ordinary packing column may of course be employed.

The detection method to be employed in the invention is characterized by using column 1 which is specifically designed to detect only a molecule having a specified structure by either eluting a non-retained substance from a given amount of molecular analyte loaded into the column 1 or using negative data that is obtained when the analyte is retained on the column. Hence, the method is characterized by using a plurality of columns 1 in a single system, with probe molecules 2 being fixed thereto as substances that are specific to molecules having specified structures.

The probe molecules 2 may be DNA, RNA or PNA (peptide nucleic acid) and fragments thereof, oligonucleotides having desired base sequences, antigens, antibodies or epitopes, enzymes, proteins or polypeptide chains at functional sites thereof. These probe molecules can be used to detect cDNA or various proteins. Other combinations can of course be employed if they consist of detection probes and analytes that belong to the affinity technique.

The so-called membrane chromatograph which uses membranous separating substrate may be formed of inorganic materials such as a nonwoven fabric or filter paper of glass fiber or organic materials such as a regenerated cellulose membrane or an acetate membrane. The membrane chromatograph may be formed of any other materials in any shape as long as it can fix the probe molecules 2. If desired, the membrane chromatograph may fix particles to which the probe molecules 2 are fixed. In order to fabricate a membrane column using
these membranes, they are preferably about 0.1-1 mm thick and usually 1-10 mm, preferably 3-7 mm, more preferably about 5 mm across when they are retained in a column.

In the case of a monolithic column system using a monolithic separating substrate, porous glass columns or polymer sinters can be used and they are usually about 1-10 mm, preferably about 2-5 mm, more preferably 3-4 mm, in both thickness and diameter; smaller or larger sizes can of course be adopted. If a monolithic column is to be fabricated using a porous glass column which is 4 mm in both thickness and diameter, it is first surrounded by a tubular body or a ring of synthetic resin which in turn is put into a tubular holder to form a monolithic column. Since the porous glass column has pores of substantially the same inside diameter that pass through from one end to the other, it can provide an extremely large number of separation stages in liquid chromatography and hence offers great benefit. The columns are very small, inexpensive and can be replaced easily, so even if a large number of the columns are combined, a chromatographic system can be fabricated at a low overall cost and it allows for easy maintenance.

A large number of independent columns 1 may be combined or, alternatively, a plurality of column subassemblies may be assembled to construct an integral system.

One of the following two methods may be employed to introduce a sample in the system of the invention: (a) a continuously operating sampler 3, a switching valve 4 operatively associated with said sampler, selectable lines and a plurality of columns 1 that are coupled to said selectable lines and which have probe molecules 2 fixed thereto that will cause different specific binding reactions are provided; identical samples are sequentially introduced in the same quantity into said plurality of columns and the effluents from the respective columns are allowed to converge and then introduced into a single detector 5, whereby the samples are sequentially loaded into the plurality of different columns 1 for sequential detection; alternatively, (b) a splitting (distributing) sampler 6 capable of simultaneously supplying divided portions of a sample in a constant quantity, branch lines coupled to said sampler and a plurality of columns 1 that are coupled to said branch lines and which have probe molecules fixed thereto that will cause different specific binding reactions are provided; identical samples are simultaneously introduced in the same quantity into said plurality of columns and then the effluents from the respective columns are introduced into separate detectors, whereby the samples are simultaneously loaded into the plurality of different columns 1 for simultaneous detection. Method (a) has the advantage of being cost-effective and method (b) is capable of accomplishing the intended detection within a shorter time.

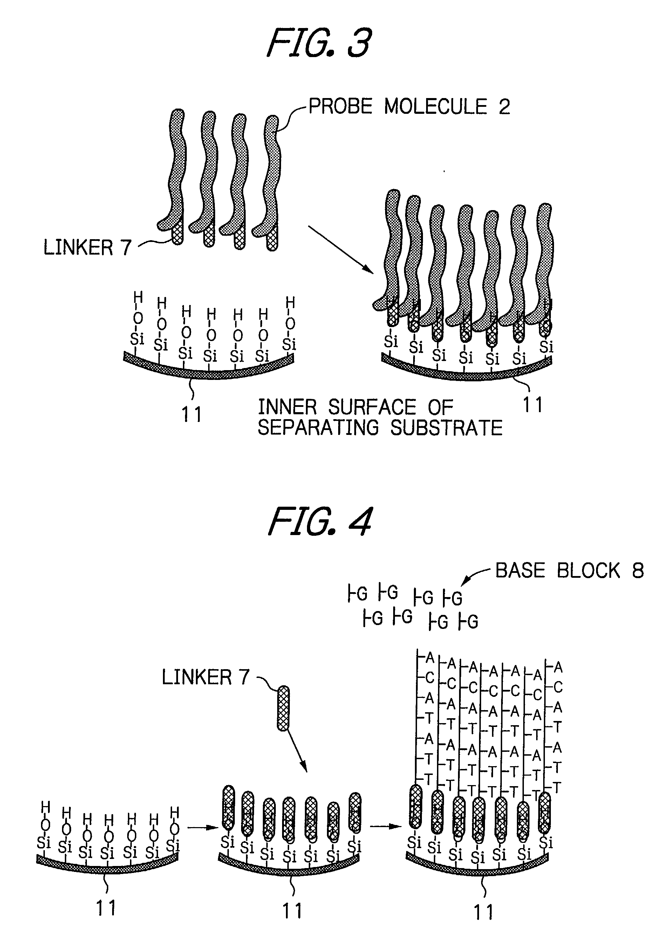

Fig. 2 shows in conceptual form how probe molecules are fixed within the separating substrate generally indicated by 11. In Fig. 2, porous glass is used as the separating substrate 1. Having a large number of pores 14 with uniform inside diameter, the porous glass has probe molecules 2 fixed on the inner surfaces of the pores 14. Figs. 3 and 4 illustrate how the probe molecules 2 can be fixed. If probe molecules 2 are natural or synthesized polynucleotide fragments such as cDNA, they can be fixed within the separating substrate 11 by using certain linkers 7. By incorporating a large number of individual separating substrate units 11, binding reactions can take place simultaneously within the same reaction vessel and this offers considerably high efficiency. In addition, the individual separating substrate units 11 having the probes fixed thereto can keep the same quality, so important parameters such as the amount of the probe being carried on each substrate can be easily controlled by sampling test.

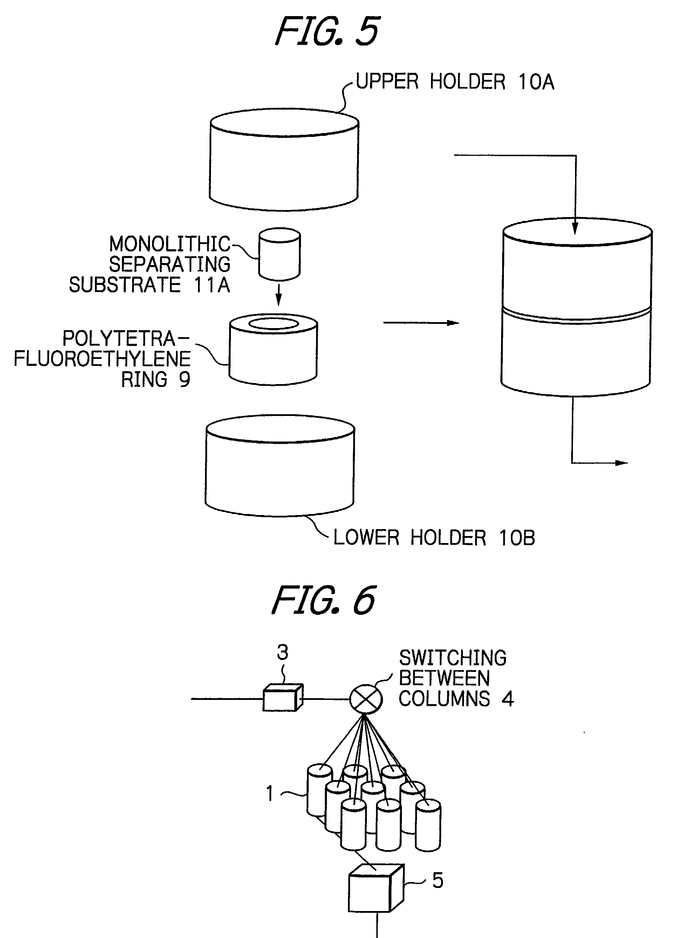

If synthetic oligonucleotides are to be used as probe molecules 2, base sequences may be synthesized within the separating substrates 11 by a suitable method such as the phosphamidite technique. Again, by incorporating a large number of individual separating substrate units 11, nucleotide binding reactions can take place simultaneously within the same reaction vessel and this offers considerably high efficiency. In addition, the individual separating substrate units 11 having the oligonucleotides fixed thereto can keep the same quality, so important parameters such as the amount of the probe 2 being carried on each substrate can be easily controlled by sampling test; what is more, the absence of the need for slicing and purification procedures realizes low-cost fabrication of probes. Since synthesis occurs within comparatively large pores, even oligonucleotide probes of a fairly large size (e.g. 100-base) can be easily fabricated. Shown by 8 in Fig. 3 is a base block. Fig. 5 shows in conceptual form an example of the method of installing a variety of separating substrates 11 within columns. While lot of columns are mechanically combined to form a larger bundle, it is important to align them in such a way that the laboratory technician can tell which probe molecule has been fixed in which column. Further referring to Fig. 5, numeral 9 designates a PTFE (polytetrafluoroethylene) ring and 10A and 10B are an upper holder and a lower holder, respectively.

### (Reaction)

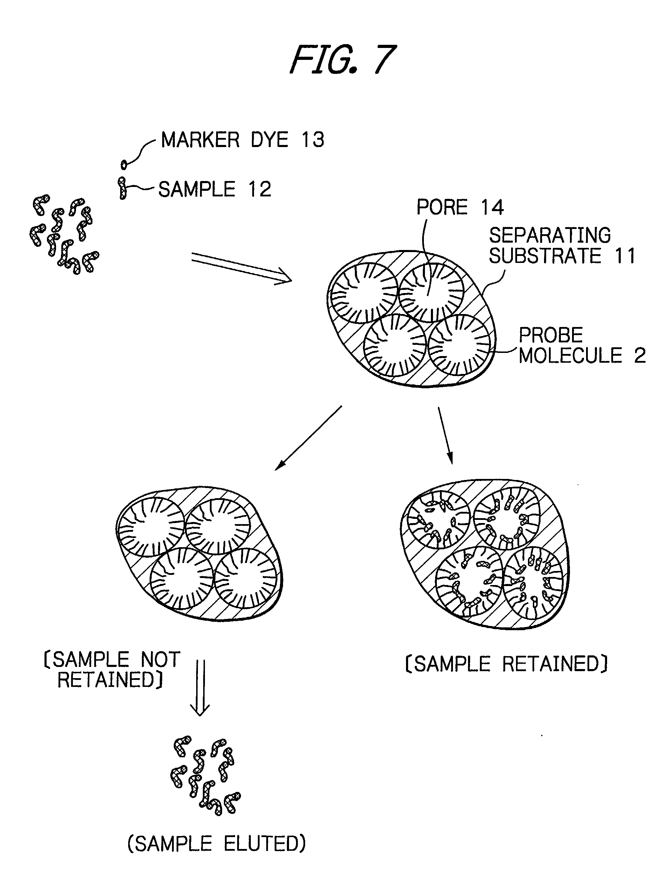

Reaction between a sample and an affinity detection/analysis chip is initiated as the sample is successively introduced into columns 1 as shown in Fig. 6. As specifically shown in Fig. 7, the introduced sample 12 flows through the column 1 and, in response to a specific reaction, is retained within a pore 14 in the column separating substrate 11 by binding to the probe fixed in the pore. If the sample to be flowed has no detectable absorption, it may be stained with a suitable marker dye or it may optionally be labeled with a fluorochrome.

### (Detection)

The key to the conventional chromatography is detecting sample elution over time to identify the object of interest or changing the composition of the eluant to detect the resulting elution. In this context, non-elution due to strong adsorption on the column has only been considered as a negative effect that causes column deterioration.

The present inventors however thought that the phenomenon of column adsorption would be useful in detection under affinity conditions. To be specific, sample 12 will not elute from the column 1 in which it has experienced reaction or the column will exhibit a certain kind of elution profile for the sample. As a result, the specified target molecule in the sample is identified in an affinity column that is specific for the target molecule. In this case, the adsorption of the target molecule can be detected in a very short column. If desired, the molecule that was once retained may be detected by canceling the affinity conditions and placing it under eluting conditions so that it elutes. The column may of course be regenerated for repeated use.

### (System and apparatus)

The above-described detection procedure is implemented by the detection system and apparatus of the invention. They are equipped with a computer that causes the sample 12 to be introduced in exact quantities into columns 1 having respectively different probe molecules 2 and which controls detection data. Each of the columns 1 may have two or more probe molecules.

The following examples are provided for further illustrating the present invention but are in no way to be taken as limiting.

### Example 1:

Separating media in the form of porous glass cylinders that had internal pore sizes of 2 microns and which had overall dimensions of 4 mm in both diameter and length were aminated and cDNA from a variety of libraries were attached to their interior using glutaraldehyde as a linker. The separating media were then fixed in stainless steel holders with the aid of PTFE rings to make 50 monolithic columns. The columns were coupled to a continuously operating sampler via an operatively associated switching valve and selectable lines.

Fluorescently labeled cDNA was flowed as the analyte into the sampler but it did not elute from any specific columns.

### Example 2:

Filter paper made of glass filaments with a diameter of 5 microns was activated and the fiber surface was aminated; thereafter, 50-base oligonucleotides were synthesized by the phosphamidite method using succinic acid as a linker. Ten sheets of the thus prepared paper were stacked and fixed in a holder to make a membrane column. Similarly, 50-base oligonucleotides having different sequences were synthesized on different kinds of filter paper and subsequently processed to make a membrane column. In this way, 100 membrane columns were prepared. A splitting sampler capable of simultaneously supplying divided portions of a sample in a constant quantity into the columns and branch lines coupled to said sampler were coupled to the columns that had probe molecules fixed thereto and which would cause different specific binding reactions; identical samples were simultaneously introduced in the same quantity into the columns and the effluents from the respective columns were introduced into separate detectors, whereby the samples were simultaneously loaded into the plurality of different columns for simultaneous detection.

According to the invention, there is easily provided analytical means that does not require any special facilities such as photolithographic facility but which uses a reactive probe such as a protein having a desired composition or an oligonucleotide having a desired base sequence, namely, a substance that selectively binds to a specific molecule, thereby not only achieving selective detection of the specific molecule but also providing simultaneous information about the presence of a large number of molecules; this analytical means is also detection means that allows for highly sensitive analysis with relative ease while achieving faster detection speed.

If columns loaded with a variety of reactive substances are provided, affinity detection/analysis systems having diverse reactive substances fixed as probes can be conveniently supplied as required and in required combinations. The invention also provides a low-cost and stable affinity detection/analysis system. Therefore, the invention enables the construction of DNA and otherwise targeted affinity detection/analysis systems that meet specific needs of individual persons and thereby contributes to order-made medical practices.

In addition to higher sensitivity, detection can be performed without causing undue burden on the sample by eliminating the need for matching it with a fluorescent indicator. What is more, a variety of pigments can be used simultaneously and this enables simultaneous analysis of a great variety of substances. With these advantages, the invention offers detection means that finds use in new application areas such as protein detection from which the conventional DNA chips have been excluded.

## Claims

1. A multi-column affinity detection system which comprises a plurality of columns having probe molecules fixed thereto that will cause different specific binding reactions, a switching mechanism and one or more detectors, said system being capable of simultaneous or sequential detection of many kinds of affinity characteristics with the respective elements being functionally connected together.

2. The multi-column affinity detection system according to claim 1, wherein said columns having probe molecules fixed thereto are monolithic columns or membrane columns.

3. The multi-column affinity detection system according to claim 1 or 2, wherein said probe molecules are DNA, RNA or PNA and fragments thereof, oligonucleotides having desired base sequences, antigens, antibodies or epitopes, enzymes, proteins or polypeptide chains at functional sites thereof.

4. The multi-column affinity detection system according to any one of claims 1 - 3, wherein said switching mechanism comprises a continuously operating sampler and a switching valve that is operatively associated with said sampler and which is coupled to said plurality of columns which have probe molecules fixed thereto that will cause different specific binding reactions and wherein identical samples are sequentially introduced in the same quantity into said plurality of columns and the effluents from the respective columns are allowed to converge and then introduced into a single detector, whereby the samples are sequentially loaded into the plurality of different columns for sequential detection.

5. The multi-column affinity detection system according to any one of claims 1 - 3, wherein said switching mechanism is a splitting sampler capable of simultaneously supplying divided portions of a sample in a constant quantity and wherein branch lines coupled to said sampler are also coupled to said plurality of columns which have probe molecules fixed thereto that will cause different specific binding reactions and wherein identical samples are simultaneously introduced in the same quantity into said plurality of columns and the effluents from the respective columns are introduced into separate detectors, whereby the samples are simultaneously loaded into the plurality of different columns for simultaneous detection.
